# EUROPÄISCHE PATENTSCHRIFT

(11) **EP 3 391 492 B1**
(45) Veröffentlichungstag und Bekanntmachung des Hinweises auf die Patenterteilung: **20.01.2021**
(21) Anmeldenummer: 15816435.0
(22) Anmeldetag: 16.12.2015
(51) Int. Cl.: H02H 7/122, H02P 29/00, H02M 1/32, H02H 7/08

(54) **LEISTUNGSELEKTRONIKEINHEIT**
POWER ELECTRONICS UNIT
UNITÉ ÉLECTRONIQUE DE PUISSANCE

(43) Veröffentlichungstag der Anmeldung: 24.10.2018
(73) Patentinhaber: L3 Magnet-Motor GmbH, 82319 Starnberg (DE)
(72) Erfinder: ERHART, Peter, 82319 Starnberg (DE); STEFFEN, Jens, 82319 Starnberg (DE)
(74) Vertreter: Schmitt-Nilson Schraud Waibel Wohlfrom Patentanwälte Partnerschaft mbB
(86) Internationale Anmeldenummer: PCT/EP2015/080030
(87) Internationale Veröffentlichungsnummer: WO 2017/101996

(56) Entgegenhaltungen:
- WO-A1-2008/122602
- US-A1- 2006 181 239
- US-A1- 2015 162 816

## Beschreibung

Die vorliegende Erfindung betrifft eine Leistungselektronikeinheit zur Ansteuerung einer permanentmagnetisch erregten elektrischen Maschine mit einem Rotor und einem wenigstens eine Statorwicklung aufweisenden Stator. Die Leistungselektronikeinheit weist wenigstens einen Leistungsschalter, der zur Ansteuerung der Statorwicklung ausgebildet ist, und eine Überspannungs-Schutzeinrichtung zum Schutz des Leistungsschalters vor Überspannung auf.

Die EMK von permanentmagnetisch erregten Maschinen, d. h. Motoren und/oder Generatoren, hat einen im Wesentlichen linearen Verlauf mit der Drehzahl des die Magnete tragenden Rotors. In Auslegungen nach Stand der Technik wird die maximale EMK an der maximalen Drehzahl des Rotors erreicht. Mit dem maximal möglichen Phasenstrom der mit der elektrischen Maschine verbundenen Leistungselektronik ist damit die durch das maximale Drehmoment am linken oberen Punkt der Leistungshyperbel und die maximale Drehzahl die theoretisch maximal erreichbare Eckleistung der Maschine gegeben. Allerdings können höhere Drehzahlen erreicht werden, wenn der Phasenwinkel der von der Leistungselektronik eingeprägten Gegenspannung und damit der wirksame Phasenstrom gegenüber der EMK des Rotors verstellt wird und die Maschine in einem Feldschwächmodus betrieben wird, wie er vor allem bei elektrischen Maschinen mit Erregerwicklungen bekannt ist. Im Falle einer permanentmagnetisch erregten Maschine wird bei Feldschwächbetrieb die in Richtung der Leistungselektronik wirksame EMK durch den bei Stromfluss induktiven Spannungsabfall in der Maschine erniedrigt und die maximal zulässige an der Leistungselektronik wirksame Spannung erst bei höheren Drehzahlen erreicht. Diese Methode erfordert jedoch Schutzmechanismen gegen plötzlichen Ausfall des Blindstromanteils, denn in diesem Fall entfällt der induktive Spannungsabfall und die "unmanipulierte" EMK steht an der Leistungselektronik an. Falls dies in Drehzahlbereichen auftritt, bei denen die EMK über dem für die Leistungselektronik maximal zulässigen Wert liegt, kann dies zu Schäden bis hin zur teilweisen Zerstörung der Leistungselektronik führen.

Die EP 0 970 840 und EP 0 974 483 zeigen eine Schutzeinrichtung gegen Spannungsrückwirkung bei einem permanentmagnetisch erregten Antrieb, der im Feldschwächbetrieb betrieben wird. Die Schutzeinrichtung ist zwischen einem den Motor ansteuernden Umrichter und den Motor an die Netzphasen geschaltet und weist eine Drehstrom-Diodenbrücke auf, in deren Ausgang ein Thyristor geschaltet und parallel dazu eine Spannungsschutzelektronik geschaltet ist. Der Schutz vor zu hohen Klemmenspannungen zwischen Motor und Antriebsregelung erfolgt durch Zünden des Thyristors und den dadurch verursachten Kurzschluss aller Motoranschlüsse über die Drehstrom-Diodenbrücke. Der Durchlasswiderstand von Diodenbrücke und Thyristor fungiert in dieser Anordnung als Bremslast.

Die EP 0 742 637 zeigt eine Schaltungsanordnung zur Realisierung eines integrierten Ankerkurzschlusses für einen über einen Umrichter angesteuerten elektrischen Drei-Phasen-Antrieb zum sicheren Abbremsen des Antriebs im Notbremsfall in einem nicht näher beschriebenen Fehlerfall. Um im Fehlerfall eine Notbremsung herbeizuführen, wird in der Steuerung eine Möglichkeit zur Herstellung eines integrierten Ankerkurzschlusses geschaffen, indem eine Wechselrichter-Brücke des Umrichters in sicherer Technik gesperrt wird, während die andere Wechselrichter-Brücke durch getaktete Ansteuerung einen Kurzschluss der Phasen des elektrischen Antriebes herbeiführt. Die Taktung wird so gewählt, dass der durch die Ankerbewegung induzierte Kurzschlussstrom in den Ankerwicklungen ein möglichst geeignetes Bremsmoment für den Anker erzeugt.

Die US 2015/0162816 A1 zeigt eine Stromrichtervorrichtung für eine Ein- oder Mehrachsanordnung mit einem Gleichspannungszwischenkreis, mehreren Wechselrichtern, die jeweils einerseits an dem Gleichspannungszwischenkreis angeschlossen und andererseits an je einen Motor anschließbar sind, und einer Steuereinrichtung, mit der jeder der Wechselrichter kurzschließbar ist. Die Stromrichtervorrichtung besitzt eine Messeinrichtung zum Messen je einer elektrischen Größe an jedem der Wechselrichter. Durch die Steuereinrichtung ist für jeden der Wechselrichter unabhängig voneinander anhand der jeweils gemessenen elektrischen Größe direkt oder indirekt feststellbar, ob der betreffende Wechselrichter Energie in den Gleichspannungszwischenkreis einspeist. Wenn das der Fall ist, wird dieser Wechselrichter unabhängig von den anderen Wechselrichtern kurzgeschlossen.

Aufgabe der vorliegenden Erfindung ist es, eine alternative und schaltungstechnisch einfachere Schutzeinrichtung gegen Spannungsrückwirkung bei einer permanentmagnetisch erregten elektrischen Maschine bereitzustellen, die insbesondere für den Fall des Betriebs der elektrischen Maschine im Feldschwächbetrieb geeignet ist.

Diese Aufgabe wird erfindungsgemäß gelöst durch eine Leistungselektronikeinheit gemäß Anspruch 1 und ein Verfahren gemäß Anspruch 13.

Erfindungsgemäß wird eine Leistungselektronikeinheit zur Ansteuerung einer permanentmagneterregten elektrischen Maschine mit einem Rotor und einem mehrere Statorwicklungen aufweisenden Stator vorgeschlagen, welche folgende Merkmale aufweist: Die Leistungselektronikeinheit weist wenigstens einen Leistungsschalter, der zur Ansteuerung einer der Statorwicklungen ausgebildet ist, und eine Überspannungs-Schutzeinrichtung zum Schutz des Leistungsschalters vor Überspannung auf. Die Überspannungs-Schutzeinrichtung weist eine dem Leistungsschalter zugeordnete Phasenspannungs-Erfassungseinrichtung sowie eine Kurzschluss-Schalteinrichtung auf, welche bei Erreichen oder Überschreiten eines vorgegebenen Phasenspannungs-Schwellenwerts der von der Phasenspannungs-Erfassungseinrichtung erfassten Phasenspannung zum Kurzschließen der dem Leistungsschalter zugeordneten Statorwicklung aktivierbar ist. Dabei weist die Kurzschluss-Schalteinrichtung den zur Ansteuerung der Statorwicklung ausgebildeten Leistungsschalter auf.

Die Kurzschluss-Schalteinrichtung ist derart ausgebildet, dass sie die dem Leistungsschalter zugeordnete Statorwicklung kurzschließt, wenn die von der Phasenspannungs-Erfassungseinrichtung erfasste Phasenspannung einen vorgegebenen Phasenspannungs-Schwellenwert erreicht oder überschreitet. Die Kurzschluss-Schalteinrichtung umfasst eine Auswertelogik zur Ansteuerung der Kurzschluss-Schalteinrichtung. Aktivierung und Deaktivierung der Kurzschluss-Schalteinrichtung kann dann durch die Auswertelogik gesteuert werden. Der vorgegebene Phasenspannungs-Schwellenwert kann je nach Betriebssituation einstellbar sein. Hierfür kann die Auswertelogik vorgesehen sein, welche derart ausgebildet ist, dass der vorgegebene Phasenspannungs-Schwellenwert einstellbar ist, etwa derart, dass der vorgegebene Phasenspannungs-Schwellenwert immer unterhalb einer maximal zulässigen Spannungsfestigkeit des Leistungsschalters liegt.
Die Auswertelogik erfasst in mehreren in Betrieb befindlichen Phasen, insbesondere in allen in Betrieb befindlichen Phasen der elektrischen Maschine die jeweils auftretenden Phasenspannungen und steuert dann, wenn eine dieser Phasenspannungen den vorgegebenen Phasenspannungs-Schwellenwert erreicht oder überschreitet, einen oder mehrere der jeweiligen Phase zugeordnete(n) Leistungsschalter der Wechselrichterbrücke so an, dass der jeweilige Phasenstrom kurzgeschlossen ist.

Die Überspannungs-Schutzeinrichtung reduziert durch Aktivierung der Kurzschluss-Schalteinrichtung die bei Ausfall des Blindstroms an dem Leistungsschalter anstehende Spannung auf eine tragbare Höhe. Die Aktivierung der Kurzschluss-Schalteinrichtung erfolgt bei Überschreitung einer dem jeweiligen Leistungsschalter zugeordneten Schwellenspannung durch die Phasenspannungs-Erfassungseinrichtung. Erfindungsgemäß kann die bei Ausfall des Blindstroms an dem Leistungsschalter anstehende Spannung durch Kurzschließen der dem Leistungsschalter zugeordneten Statorwicklung beispielsweiseüber eine mit dem Leistungsschalter verbundene Potentialschiene erfolgen. Dadurch entsteht ein Kurzschlussstrom in der Statorwicklung, der von der durch die Rotorbewegung induzierten Spannung angetrieben wird. Der Kurschlussstrom fließt über den Leistungsschalter, allerdings ohne nennenswerten Spannungsabfall am Leistungsschalter. Insbesondere kann das Kurzschließen derart erfolgen, dass der Kurzschlussstrom im Wesentlichen nur einen induktiven Blindstromanteil, jedoch keinen nennenswerten - oder jedenfalls keinen bedeutenden - ohmschen Wirkanteil hat, so dass die Bewegung des Rotors nur wenig gebremst wird. Die Aktivierung der Kurzschluss-Schalteinrichtung soll vor allem bei hohen Drehzahlen erfolgen.Es kann günstig sein, die Kurschluss-Schalteinrichtung nach erfolgter Aktivierung dauerhaft, jedenfalls für einen gegenüber der Anzahl der Umdrehungen des Rotors genügend langen Zeitraum, aktiviert zu halten. Anders ausgedrückt, kann es insbesondere vorgesehen sein, die Kurzschluss-Schalter mit einer Frequenz zu aktivieren, die sich deutlich von der Drehzahl der elektrischen Maschine unterscheidet, insbesondere deutlich kleiner ist als die Polwechselfrequenz der elektrischen Maschine.

Die Auslegung der Stromfestigkeit der Kurzschluss-Schalter kann gemäß dem maximalen Kurzschluss-Strom der angeschlossenen elektrischen Maschine, der im Auslösungsfall von dem Kurzschluss-Schalter geführt werden muss, erfolgen. Dabei macht man sich zunutze, dass permanentmagnetisch erregte Maschinen (d.h. permanentmagnetisch erregte Motoren und/oder Generatoren) im kurzgeschlossenen Zustand einen Strom etwa in Höhe des maximalen Betriebsstroms führen.

Besondere Ausführungsformen der vorliegenden Erfindung können eines oder mehrere der folgenden optionalen Merkmale aufweisen. Diese können je für sich, aber auch in Kombination miteinander verwirklicht sein, sofern nicht explizit anders angegeben:
Insbesondere kann der Leistungsschalter ein der Statorwicklung zugeordnetes Kurzschluss-Schaltelement der Kurzschluss-Schalteinrichtung bilden und die Kurzschluss-Schalteinrichtung kann derart ausgebildet sein, dass sie den Leistungsschalter in einen leitenden Zustand schaltet, um die dem Leistungsschalter zugeordnete Statorwicklung kurzzuschließen.

Insbesondere kann der Leistungsschalter als Schalteinrichtung einer Wechselrichter-Brücke zur Ansteuerung der Statorwicklung ausgebildet sein. Beispielsweise kann ein Wechselrichter zur Ansteuerung einer elektrischen Maschine eine Wechselrichter-Brücke mit jeweils zwei Leistungsschaltern einer ersten und einer zweiten Brücke aufweisen. Dann kann jeder Phase der elektrischen Maschine eine eigene Kurzschluss-Schalteinrichtung zugeordnet sein, die von jeweils zwei Leistungsschaltern der ersten und der zweiten Brücke gebildet ist. Die Leistungsschalter im ersten oder zweiten Brückenzweig können dann in Reaktion auf eine Überspannung kurzgeschlossen werden, zum Schutz des Wechselrichters vor Überspannung.

In vielen Fällen kann die Leistungselektronikeinheit einen Gleichspannungszwischenkreis mit einem ersten Pol (z.B. Pluspol) und einem zweiten Pol (z.B. Minuspol) aufweisen. Dann wird der Eingang des wenigstens einen Leistungsschalters mit einem der Pole des Gleichspannungszwischenkreises verbunden sein.

Die Leistungselektronikeinheit kann eine mehrphasige Wechselrichterbrücke zur Ansteuerung eines mit mehreren Statorwicklungen versehenen Stators aufweisen. Üblich sind beispielsweise dreiphasige Wechselrichterbrücken zur Ansteuerung eines mit drei Statorwicklungen versehenen Stators. Grundsätzlich kann die Leistungselektronikeinheit aber auch für mehr als drei Phasen ausgelegt sein und sogar für Einphasen-Maschinen, bei denen nur eine Statorwicklung und dementsprechend nur je ein Leistungsschalter für den Pluspol des Gleichspannungszwischenkreises und ein Schalter für den Minuspol des Gleichspannungszwischenkreises vorgesehen ist.

Im Falle einer elektrischen Maschine in Dreieckschaltung ist jeder Phase eine eigene Kurzschluss-Schalteinrichtung zugeordnet, die von jeweils zwei im Kurzschlussfall geschlossenen Leistungsschaltern gebildet ist. Im Kurzschlussfall sind dann zwei Leistungsschalter geschlossen, die mit demselben Pol des Gleichspannungszwischenkreises verbunden sind. Die mit dem anderen Pol des Gleichspannungszwischenkreises verbundenen Leistungsschalter sind offen. Der Stromkreis, in dem der Kurzschlussstrom fließt, liegt also auf demselben Potential des Gleichspannungszwischenkreises. Eine ähnliche Anordnung lässt sich auch im Falle einer elektrischen Maschine in Sternschaltung realisieren mit der Maßgabe, dass dann bei zwei im Kurzschlussfall geschlossenen Leistungsschaltern zwei nebeneinander liegende Statorwicklungen kurzgeschlossen werden.

Die Kurzschluss-Schalteinrichtung kann insbesondere derart ausgebildet sein, dass sie den Leistungsschalter nach erfolgter Aktivierung zur Erzeugung eines Kurzschlusses der zugeordneten Statorwicklung bis zur Deaktivierung der Kurzschluss-Schalteinrichtung in leitendem Zustand hält. Dann ist die entsprechende Statorwicklung nach erfolgter Aktivierung der Kurzschluss-Schalteinrichtung bis zur Deaktivierung dauerhaft kurzgeschlossen. Es hat sich gezeigt, dass bei permanentmagnetisch erregten Synchronmaschinen in vielen Fällen die Statorwicklungen eine solche Induktivität aufweisen, dass bei von der Aktivierung der Kurzschluss-Schalteinrichtung bis zur Deaktivierung vollständig kurzgeschlossener Statorwicklung eine Spannung induziert wird, deren Wirkanteil relativ gering ist. Aus diesem Grund führt die Aktivierung der Kurzschluss-Schalteinrichtung nicht zu einer merklichen Bremswirkung für den Rotor der elektrischen Maschine.

Um eine zu starke Bremswirkung bei Aktivierung der Kurzschluss-Schalteinrichtung zu vermeiden, kann insbesondere vorgesehen sein, dass die Kurzschluss-Schalteinrichtung derart ausgebildet ist, dass sie den Leistungsschalter nur dann zur Erzeugung eines Kurzschlusses der zugeordneten Statorwicklung in leitenden Zustand schaltet, wenn die Drehzahl des Rotors eine vorgegebene Mindestdrehzahl erreicht oder überschreitet. Bei niedrigeren Drehzahlen ist eine unzulässig hohe Überspannung normalerweise nicht zu erwarten. Somit ist es möglich, die Kurzschluss-Schalteinrichtung zu deaktivieren, solange nicht eine Mindestdrehzahl erreicht oder überschritten ist. Die Mindestdrehzahl kann so gewählt werden, dass die drehzahlabhängig vom Rotor induzierte Spulenspannung unterhalb der Spannungsfestigkeit der im Leistungskreis befindlichen Bauelemente liegt.. Sie kann insbesondere 1000 min⁻¹ betragen, und manchmal sogar 1500 min⁻¹, und sogar 2000 min⁻¹ betragen.

Es kann auch vorgesehen sein, eine Aktivierung der Kurzschluss-Schalteinrichtung nur in bestimmten Betriebsmodi der elektrischen Maschine zuzulassen, beispielsweise, indem die Kurzschluss-Schalteinrichtung derart ausgebildet ist, dass sie den Leistungsschalter nur dann zur Erzeugung eines Kurzschlusses der zugeordneten Statorwicklung durchschaltet, wenn die elektrische Maschine in einem Feldschwächungsmodus arbeitet. Im Falle einer permanentmagnetisch erregten elektrischen Maschine wird die Feldschwächung dadurch erreicht, dass der Phasenwinkel der von der Leistungselektronik eingeprägten Gegenspannung und damit der wirksame Phasenstrom gegenüber der EMK des Rotors verstellt wird. Als Folge entsteht ein von den Statorwicklungen ausgehendes Gegenfeld, das das von den Permanentmagneten des Rotors erzeugte Erregerfeld teilweise verdrängt. Im Feldschwächmodus können höhere Drehzahlen erreicht werden als die bei Proportionalität von Drehzahl und induzierter Spannung durch die maximale Spannungsbelastbarkeit der elektronischen Komponenten vorgegebene Maximaldrehzahl, weil die in Richtung der Leistungselektronik wirksame EMK durch den bei Stromfluss induktiven Spannungsabfall in der Maschine erniedrigt wird und die maximal zulässige an der Leistungselektronik wirksame Spannung erst bei höheren Drehzahlen ansteht.

Die Auswertelogik kann ferner eine Hysterese-Logik beinhalten, die derart ausgebildet ist, dass Aktivierung und Deaktivierung der Kurzschluss-Schalteinrichtung bei verschiedenen Phasenspannungen erfolgen. So kann die Hysterese-Logik beispielsweise dafür sorgen, dass die Kurzschluss-Schalteinrichtung den dem Leistungsschalter zugeordneten Phasenstrom erst dann kurzschließt, wenn die von der Phasenspannungs-Erfassungseinrichtung erfasste Phasenspannung einen vorgegebenen ersten Phasenspannungs-Schwellenwert erreicht oder überschreitet. Weiterhin kann die Hysterese Logik dafür sorgen, dass die Kurzschluss-Schalteinrichtung den Kurzschlusszustand erst dann wieder beendet, wenn die von der Phasenspannungs-Erfassungseinrichtung erfasste Phasenspannung einen vorgegebenen zweiten Phasenspannungs-Schwellenwert erreicht oder unterschreitet, der unterhalb des ersten Phasenspannungs-Schwellenwerts liegt.

Der Kurzschluss-Schalteinrichtung kann eine eigene Energieversorgung zugeordnet sein, die unabhängig von der Energieversorgung der Leistungselektronikeinheit ist. Dadurch kann die Überspannungs-Schutzeinrichtung unabhängig von einer Störung der Spannungsversorgung der elektrischen Maschine gewährleistet werden. Dies ist insbesondere in solchen Fällen von Bedeutung, in denen die Gefahr besteht, dass die gleichgerichtete EMK der elektrischen Maschine nach Ausfall der Spannungsversorgung ansteht. Als Beispiele für derartige eigene Energieversorgungen kommen etwa in Frage: vom Versorgungsnetz gepufferte Energiespeicherelemente, wie Batterien, Kondensatoren, Ultra-Caps; von der induzierten Spannung der elektrischen Maschine gepufferte Energiespeicher-Elemente; Versorgung der Kurzschluss-Schalteinrichtung direkt durch induzierte Spannung der elektrischen Maschine.

Bei mehrphasiger Konfiguration von elektrischer Maschine und Überspannungs-Schutzeinrichtung bietet es sich an, die Kurzschluss-Schalteinrichtung derart auszubilden, dass sie mit den Kurzschluss-Schalteinrichtungen von anderen in Betrieb befindlichen Phasen, insbesondere aller anderen in Betrieb befindlichen Phasen in Datenaustausch steht. Auf diese Weise kann eine gewisse Redundanz der Phasenspannungs-Erfassungseinrichtungen erzielt werden, die zu einer genaueren Erfassung der Phasenspannungen genutzt werden kann, z.B. durch Auswerten aller Phasenspannungen in Fällen, in denen alle Phasenspannungen identisch sind. Auch kann der Ausfall einer Phasenspannungs-Erfassungseinrichtung von den anderen Phasenspannungs-Erfassungseinrichtungen detektiert werden.

Gemäß einem weiteren Aspekt wird ein Verfahren zur Ansteuerung einer permanentmagnetisch erregten elektrischen Maschine mit einem Rotor und einem wenigstens eine Statorwicklung aufweisenden Stator vorgeschlagen. Das Verfahren weist folgende Schritte auf: Ansteuern der Statorwicklung mit Hilfe eines Leistungsschalters; Erfassen einer an dem Leistungsschalter anliegenden Phasenspannung, und Kurzschließen der dem Leistungsschalter zugeordneten Statorwicklung, wenn die erfasste Phasenspannung einen vorgegebenen Phasenspannungs-Schwellenwert erreicht oder überschreitet, um die an dem Leistungsschalter anliegende Phasenspannung zu begrenzen. Dabei wird vorgeschlagen, dass das Kurzschließen mittels Schalten des Leistungsschalters in einen leitenden Zustand erfolgt.

Das Schalten des Leistungsschalters in einen leitenden Zustand kann in nicht getakteter Weise erfolgen. Dann wird der Leistungsschalter nach erfolgter Aktivierung durch Schalten in einen leitenden Zustand im Falle einer die Schwellenspannung erreichenden oder überschreitenden Phasenspannung in dem leitenden Zustand gehalten, bis der Überspannungszustand als beendet angesehen werden kann.

In bestimmten Ausführungsformen kann vorgesehen sein, dass das Schalten des Leistungsschalters in einen leitenden Zustand nur dann erfolgt, wenn die Drehzahl des Rotors eine vorgegebene Mindestdrehzahl erreicht oder überschreitet. Diese Mindestdrehzahl kann beispielsweise 1000 min⁻¹ betragen, insbesondere 1500 min⁻¹, insbesondere 2000 min⁻¹, wie oben dargelegt.

In weiteren Ausführungsformen kann vorgesehen sein, dass der Leistungsschalter nur dann in einen leitenden Zustand geschaltet wird, wenn die elektrische Maschine in einem Feldschwächungsmodus arbeitet.

Die Erfindung wird im Folgenden anhand bevorzugter Ausführungsbeispiele, die in den Figuren dargestellt sind, näher erläutert. Dabei zeigt:

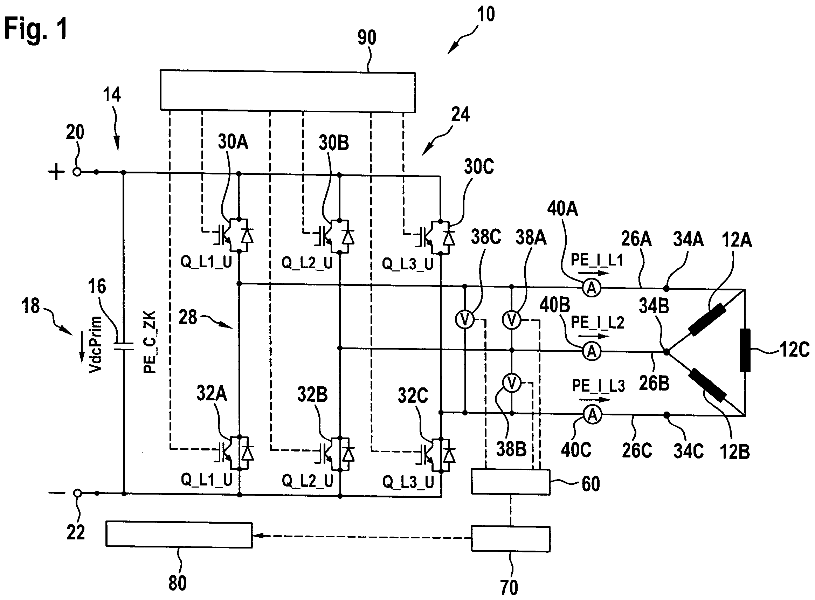

Figur 1: In schematischer und vereinfachter Weise ein Schaltbild eines Teils einer Leistungselektronikeinheit zur Ansteuerung einer permanentmagnetisch erregten elektrischen Maschine in Dreieckschaltung mit Leistungsschaltern zur Ansteuerung von Statorwicklungen und Überspannungs-Schutzeinrichtung gemäß einer Ausführungsform.

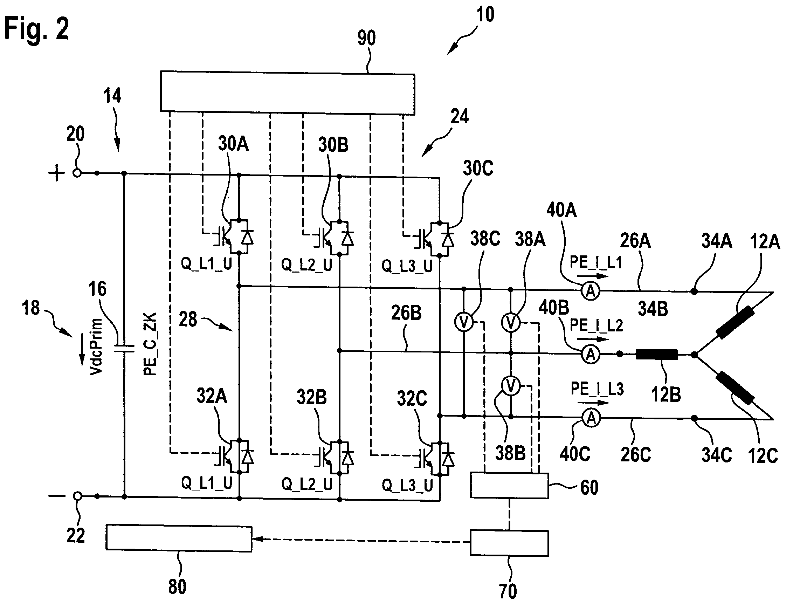

Figur 2: In schematischer und vereinfachter Weise ein Schaltbild eines Teils einer Leistungselektronikeinheit zur Ansteuerung einer permanentmagnetisch erregten elektrischen Maschine in Sternschaltung mit Leistungsschaltern zur Ansteuerung von Statorwicklungen und Überspannungs-Schutzeinrichtung zum Schutz des Leistungsschalters vor Überspannung gemäß einer Ausführungsform.

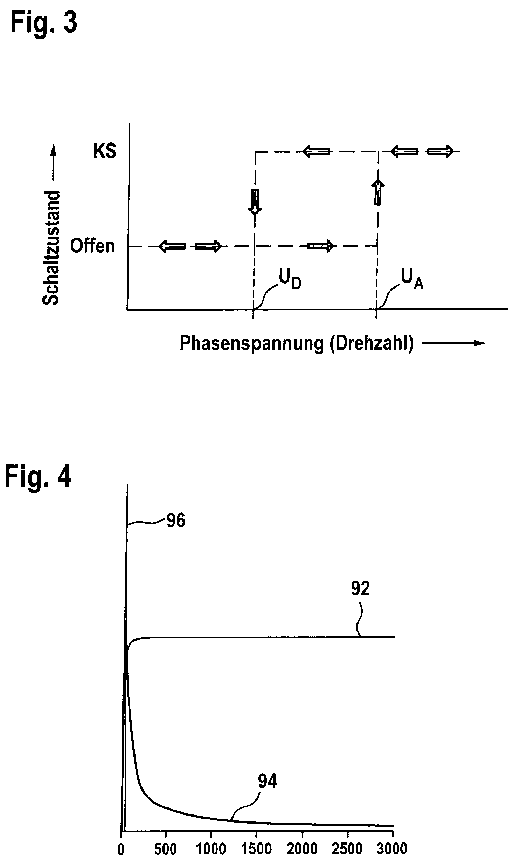

Figur 3: Ein Diagramm zur Darstellung der Hysterese zwischen Aktivierung und Deaktivierung der Überspannungs-Schutzeinrichtung;
Figur 4: Ein Diagramm, das den Verlauf des bei Aktivierung der Überspannungs-Schutzeinrichtung erzeugten Kurzschlussstroms in einer Phasenwicklung des Stators, des damit zusammenhängenden Drehmoments sowie der Kurzschlussleistung in Abhängigkeit von der Drehzahl des Rotors zeigt.

In Figur 1 erkennt man in schematischer und vereinfachter Weise ein Schaltbild eines Teils einer Leistungselektronikeinheit 10 zur Ansteuerung einer permanentmagnetisch erregten elektrischen Maschine in Dreieckschaltung. Die elektrische Maschine besitzt einen Stator mit Statorwicklungen 12A, 12B, 12C und einen Permanentmagnete tragenden Rotor (in Figur 1 nicht gezeigt). In Figur 1 sind lediglich die drei Statorwicklungen 12A, 12B, 12C schematisch angedeutet. Die Leistungselektronikeinheit 10 weist einen im Figur 1 links angedeuteten Gleichspannungszwischenkreis 14 mit einem Kondensator 16 auf. Der Gleichspannungszwischenkreis 14 liefert eine Zwischenkreisspannung VdcPrim (in Figur 1 mit 18 bezeichnet) zwischen einem positiven Pol 20 (angedeutet als positive Potentialschiene) und einem negativen Pol 22 (angedeutet als negative Potentialschiene). Der Gleichspannungszwischenkreis 14 speist einen Wechselrichter 24, an dessen Ausgängen 26A, 26B, 26C die Statorwicklungen 12A, 12B, 12C angeschlossen sind. Der Wechselrichter 24 umfasst eine dreiphasige Wechselrichterbrücke 28 mit drei Paaren von Leistungsschalten 30A, 32A, 30B, 32B, 30C, 32C. Das erste Paar von Leistungsschaltern ist einer ersten Statorwicklung 12A zugeordnet und umfasst einen mit dem positiven Pol 20 verbundenen ersten Leistungsschalter 30A und einen mit dem negativen Pol 22 verbundenen zweiten Leistungsschalter 32A. Das zweite Paar von Leistungsschaltern ist einer zweiten Statorwicklung 12B zugeordnet und umfasst ebenfalls einen mit dem Pol 20 verbundenen ersten Leistungsschalter 30B und einen mit dem negativen Pol 22 verbundenen zweiten Leistungsschalter 32b. Das dritte Paar von Leistungsschaltern ist einer dritten Statorwicklung 12C zugeordnet und umfasst ebenfalls einen mit dem positiven Pol 20 verbundenen ersten Leistungsschalter 30C und einen mit dem negativen Pol 22 verbundenen zweiten Leistungsschalter 32C. Im Folgenden werden die mit dem positiven Pol 20 verbundenen Leistungsschalter 30A, 30B, 30C generell als "obere Leistungsschalter" bezeichnet und die mit dem negativen Pol 22 verbundenen Leistungsschalter 32A, 32B, 32C generell als "untere Leistungsschalter" bezeichnet. Die Leistungsschalter 30A, 32A, 30B, 32B, 30C, 32C dienen der Ansteuerung der Statorwicklungen 12A, 12B, 12C und erzeugen aus der vom Zwischenkreis 14 gelieferten Gleichspannung ein Statordrehfeld zum Antrieb des Rotors im Motorbetrieb der elektrischen Maschine. Im Generatorbetrieb der elektrischen Maschine sorgen die Leistungsschalter 30A, 32A, 30B, 32B, 30C, 32C für Einspeisung eines in den Statorwicklungen 12A, 12B, 12C durch Drehbewegung des Rotors induzierten elektrischen Stromes in den Gleichspannungszwischenkreis 14.

Jeder der Leistungsschalter kann ein aktives elektrisches Schaltelement umfassen. Insbesondere können die Leistungsschalter 30A, 32A, 30B, 32B, 30C, 32C als Feldeffekttransistoren (FET) ausgebildet sein, wie durch die verwendeten Schaltsymbole angedeutet. Insbesondere können Metalloxid-Feldeffekttransistoren (MOSFETs) als Leistungsschalter verwendet werden. Alternativ können auch andere in der Leistungselektronik verwendete Schaltelemente verwendet werden, wie Bipolartransistoren mit isoliertem Gate (IGBT). Jeder der Leistungsschalter 30A, 32A, 30B, 32B, 30C, 32C besitzt zudem eine Freilaufdiode, die dem jeweiligen Schaltelement (MOSFET, IGBT, o.ä.) parallel geschaltet ist. Die Freilaufdiode ist so gepolt, dass sie gegenüber der Spannung an dem jeweils zugeordneten Pol 20, 22 des Zwischenkreises 14 sperrt. Damit kann im Generatorbetrieb der elektrischen Maschine ein in den Statorwicklungen 12A, 12B, 12C erzeugter Strom über eine jeweilige Freilaufdiode in den Zwischenkreis 14 geleitet werden.

Im Motorbetrieb werden die jeweiligen Leistungsschalter 30A, 32A, 30B, 32B, 30C, 32C so zwischen sperrend (oder geöffnet) und leitend (oder geschlossen) geschaltet, dass an den jeweils zugeordneten Statorwicklungen 12A, 12B, 12C ein den Rotor treibendes Drehfeld erzeugt wird. Dies kann beispielsweise durch geeignete Pulsweitenmodulation der von den Leistungsschaltern 30A, 32A, 30B, 32B, 30C, 32C an die jeweilige Statorwicklung 12A, 12B, 12C gelieferten Ein/Aus-Spannungsignale geschehen.

Figur 1 zeigt eine Konfiguration mit elektrischer Maschine in Dreieckschaltung, d.h. die drei Statorwicklungen 12A, 12B, 12C sind in Reihe geschaltet, und zwischen je zwei aufeinanderfolgenden Statorwicklungen befindet sich ein Anschluss 34A, 34B, 34C, an den ein jeweils zugeordneter Ausgang 26A, 26B, 26C des Wechselrichters 24 angeschlossen ist. Zwischen je zwei Ausgängen 26A/26B, 26B/26C, 26C/26A des Wechselrichters 24 liegt damit immer genau eine Statorwicklung 12A, 12B, 12C.

Die Spannung zwischen je zwei Ausgängen 26A/26B, 26B/26C, 26C/26A des Wechselrichters 24 wird durch je eine Phasenspannungs-Erfassungseinrichtung 38A, 38B, 38C erfasst. Jede der Phasenspannungs-Erfassungseinrichtungen 38A, 38B, 38C erfasst damit die Spannung zwischen den Enden einer jeweils zugeordneten Statorwicklung 12A, 12B, 12C. Außerdem ist jedem der Ausgänge 26A, 26B, 26C des Wechselrichters 24 je eine Phasenstrom-Erfassungseinrichtung 40A, 40B, 40C zugeordnet, die den einer jeweiligen Statorwicklung 12A, 12B, 12C zugeführten bzw. von der jeweiligen Statorwicklung 12A, 12B, 12c abfließenden Phasenstrom erfasst. Es sei angemerkt, dass die Phasenstrom-Erfassungseinrichtungen 40A, 40B, 40C jedenfalls hinsichtlich der Funktion der hier beschriebenen Überspannungs-Schutzeinrichtung nicht unbedingt erforderlich sind.

Die von den Phasenspannungs-Erfassungseinrichtungen 38A, 38B, 38C gelieferten Signale wie auch die von den Phasenstrom-Erfassungseinrichtungen 40A, 40B, 40C gelieferten Signale werden einer Auswerteeinheit 60 zugeführt und dort ausgewertet. Die Auswerteeinheit 60 steht in Datenverbindung mit einer Systemsteuerung 80 der elektrischen Maschine. Zwischen die Auswerteeinheit 60 und die Systemsteuerung 80 ist außerdem eine Hysterese-Logik 70 geschaltet, deren Funktion mit Bezug zu Fig. 3 noch näher erläutert wird.

Die Leistungsschalter 30A, 32A, 30B, 32B, 30C, 32C sind mit einer Schaltersteuerung 90 verbunden, welche für die Ansteuerung der Leistungsschalter 30A, 32A, 30B, 32B, 30C, 32C sorgt. In den gezeigten Beispielen sorgt die Schaltersteuerung 90 für die Ansteuerung der Gates der Feldeffekttransistoren, um diese zwischen einem Sperrzustand (der Leistungsschalter ist offen) und einem leitenden Zustand (der Leistungsschalter ist geschlossen) zu schalten. Die Steuerung 90 sorgt zudem für eine unabhängige Energieversorgung der Leistungsschalter 30A, 32A, 30B, 32B, 30C, 32C, so dass diese auch bei Ausfall der Steuerung der elektrischen Maschine noch angesteuert werden können.

Die elektrische Maschine verfügt darüber hinaus über eine in Figur 1 nicht gezeigte Drehzahl-Erfassungseinrichtung zur Erfassung der Drehzahl der elektrischen Maschine. Die Drehzahl kann beispielsweise mittels eines geeigneten Drehzahlsensors erfolgen. Alternativ können zur Erfassung der Drehzahl auch geeignete Signale in einer oder mehrerer der Statorwicklungen herangezogen werden, so dass ein eigens vorgesehener Drehzahlsensor nicht erforderlich ist.

Wenn eine der Phasenspannungs-Erfassungseinrichtungen 38A, 38B, 38C eine Phasenspannung erfasst, die oberhalb einer für die zugeordneten elektronischen Bauteile, insbesondere einer für die zugeordneten Leistungsschalter 30A, 32A, 30B, 32B, 30C, 32C zulässigen maximalen Spannung liegt, sorgt die Auswerteeinheit 60 dafür, dass die Schaltersteuerung 90 die jeweils zugeordneten Leistungsschalter 30A, 32A, 30B, 32B, 30C, 32C derart ansteuert, dass die jeweils zugeordnete Statorwicklung 12A, 12B, 12C kurzgeschlossen ist. Wenn beispielsweise die der ersten Statorwicklung 12A zugeordnete Phasenspannungs-Erfassungseinrichtung 38A eine unzulässig hohe Phasenspannung erfasst, sorgt sie dafür, dass die Leistungsschalter 30A und 30B in einen geschlossenen Zustand geschaltet werden, so dass ein Kurzschluss-Stromkreis entsteht, in dem ein Kurzschlussstrom durch die Statorwicklung 12A über die beiden Leistungsschalter 30A und 30B fließt. Auf diese Weise lässt sich eine Beschädigung der Leistungsschalter 30A, 30B aufgrund einer Überspannung, wie sie insbesondere dann auftreten kann, wenn die elektrische Maschine im Feldschwächungsmodus betrieben wird, zuverlässig verhindern. Selbstverständlich ist es ohne weiteres möglich, anstelle der dem positiven Pol 20 zugeordneten Leistungsschalter 30A und 30B auch die entsprechenden dem negativen Pol 22 zugeordneten Leistungsschalter 32A und 32B zu schließen, so dass der Kurzschlussstrom durch die erste Statorwicklung 12A dann über diese beiden geschlossenen Leistungsschalter 32A und 32B sowie über den negativen Pol 20 geführt wird.

Entsprechendes gilt, wenn eine der anderen Phasenspannungs-Erfassungseinrichtungen 38B, 38C eine Spannung oberhalb der für die jeweils zugeordneten Leistungsschalter zulässigen maximalen Phasenspannung erfasst. Die Phasenspannungs-Erfassungseinrichtungen 38A, 38B, 38C können je für sich arbeiten, um eine Überspannung an den jeweils zugeordneten Leistungsschaltern zu verhindern. Dies kann durchaus gleichzeitig geschehen, oder mit Zeitversatz. Es ist auch denkbar, dass die Phasenspannungs-Erfassungseinrichtungen 38A, 38B, 38C miteinander in Datenaustausch stehen, so dass das Aktivieren der Überspannungs-Schutzeinrichtungen für alle Statorwicklungen 12A, 12B, 12C in koordinierter Weise erfolgen kann, beispielsweise dass alle Statorwicklungen kurzgeschlossen werden, wenn nur eine der Überspannungs-Schutzeinrichtungen 38A, 38B, 38C eine Überspannung erfasst oder dass eine Aktivierung der Überspannungs-Schutzeinrichtung auf Grundlage eines Mittelwerts der durch die Phasenpannungs-Erfassungsinrichtungen 38A, 38B, 38C erfassten Phasenspannungen erfolgt.

Die Schaltersteuerung 90 braucht nicht unbedingt als eine separate Einheit ausgeführt zu sein, sondern sie kann auch, ggf. einschließlich der Auswerteeinheit 60 und/oder der Hystere-Logik 70, in die Systemsteuerung 80 integriert sein. Jedoch hat es Vorteile, wenn man wenigstens die Ansteuerung und Energieversorgung der Leistungsschalter 30A, 32A, 30B, 32B, 30C, 32C sowie der Phasenspannungs-Erfassungseinrichtungen 38A, 38B, 38C insoweit separat von der übrigen Steuerung und Energieversorgung der elektrischen Maschine auslegt, dass eine Erfassung von Überspannung und entsprechende Ansteuerung der Leistungsschalter 30A, 32A, 30B, 32B, 30C, 32C unabhängig vom Funktionszustand der übrigen Komponenten der elektrischen Maschine möglich ist. Dann lässt sich Überspannungs-Schutzeinrichtung auch noch aktivieren, wenn ein Fehler in anderen Bauteilen oder Einheiten der elektrischen Maschine vorliegt.

Aus dem Vorangehenden ergibt sich, dass die in Figur 1 vorgesehene Auswerteeinheit 60 sowie Hysterese-Logik 70 zwar bestimmte Vorteile bieten, aber für die Funktion der hier gezeigten Überspannungs-Schutzeinrichtung nicht unbedingt erforderlich sind.

Figur 2 zeigt entsprechend zu Figur 1 in schematischer und vereinfachter Weise ein Schaltbild eines Teils einer Leistungselektronikeinheit 10 zur Ansteuerung einer permanentmagnetisch erregten elektrischen Maschine in Sternschaltung mit Leistungsschaltern 30A, 32A, 30B, 32B, 30C, 32C zur Ansteuerung von Statorwicklungen 12A, 12B, 12C. Die Leistungselektronikeinheit 10 gemäß Figur 2 besitzt dieselbe Überspannungs-Schutzeinrichtung zum Schutz der Leistungsschalter 30A, 32A, 30B, 32B, 30C, 32C vor Überspannung wie in Figur 1 gezeigt. Der einzige Unterschied zwischen Figur 1 und Figur 2 liegt darin, dass Figur 2 die Verhältnisse bei einer in Sternschaltung angeschlossenen elektrischen Maschine zeigt. Deshalb sind in Figur 2 alle Komponenten mit denselben Bezugszeichen versehen wie in Figur 1 und es kann zur Vermeidung von Wiederholungen auf die entsprechende Beschreibung der Figur 1 verwiesen werden.

Bei der in Figur 2 gezeigten Konfiguration mit elektrischer Maschine in Sternschaltung sind die drei Statorwicklungen 12A, 12B, 12C jeweils sternförmig zwischen einen gemeinsamen Bezugspunkt und einen Anschluss 34A, 34B, 34C, an den ein jeweils zugeordneter Ausgang 26A, 26B, 26C des Wechselrichters 24 angeschlossen ist, geschaltet. Zwischen jeweils zwei der Anschlüsse 34A, 34B, 34C befinden sich damit zwei in Reihe geschaltete Statorwicklungen 12A, 12B, 12C.

Auch hier wird wieder die Spannung zwischen je zwei Ausgängen 26A/26B, 26B/26C, 26C/26A durch je eine Phasenspannungs-Erfassungseinrichtung 38A, 38B, 38C erfasst. Jede der Phasenspannungs-Erfassungseinrichtungen erfasst damit die Spannung zwischen den Enden jeweils zweier aufeinander folgender zugeordneter Statorwicklungen (nämlich die Spannung zwischen den Enden der Statorwicklungen 12A und 12B im Falle der Phasenspannungs-Erfassungseinrichtung 38A, die Spannung zwischen den Enden der Statorwicklungen 12B und 12C im Falle der Phasenspannungs-Erfassungseinrichtung 38B, und die Spannung zwischen den Enden der Statorwicklungen 12C und 12A im Falle der Phasenspannungs-Erfassungseinrichtung 38C).

Im Übrigen gilt hinsichtlich der Funktionsweise der Überspannungs-Schutzeinrichtung bei der Sternschaltung gemäß Figur 2 dasselbe wie für die in Figur 1 gezeigte Konfiguration und es wird auf die entsprechenden Ausführungen zu Figur 1 verwiesen.

Figur 3 zeigt ein Diagramm zur Darstellung der Hysterese zwischen Aktivierung und Deaktivierung der Überspannungs-Schutzeinrichtung. Eine solche Hysterese kann beispielsweise mittels der Hysterese-Logik 70 eingestellt werden. Wie in Figur 3 ersichtlich, bleibt die Überspannungs-Schutzeinrichtung inaktiv (und damit werden die jeweils entsprechenden der Leistungsschalter 30A, 32A, 30B, 32B, 32A, 32B in regulärer Funktion als Inverter-Leistungsschalter des Wechselrichters 24 angesteuert) solange eine jeweilige Phasenspannungs-Erfassungseinrichtung 38A, 38b, 38C eine Spannung unterhalb einer Aktivierungs-Schwellenspannung U_{A} erfasst. Wird die Aktivierungs-Schwellenspannung UAerreicht oder gar überschritten, so wird die Überspannungs-Schutzeinrichtung aktiviert und damit die entsprechenden der Leistungsschalter 30A, 32A, 30B, 32B, 32A, 32B in einen geschlossenen Schaltzustand geschaltet (in Figur 3 durch "KS" angedeutet). In diesem Schaltzustand kann ein Kurzschlussstrom durch die zugeordnete Statorwicklung 12A, 12B, 12C fließen. Der Schaltzustand "KS" bleibt beibehalten, bis die von der jeweiligen Phasenspannungs-Erfassungseinrichtung 38A erfasste Phasenspannung auf eine Deaktvierungs-Schwellenspannung UD abgesunken ist, die kleiner ist als die Aktivierungs-Schwellenspannung U_{A}. Das Erreichen der Deaktvierungs-Schwellenspannung UD kann beispielsweise in kurzgeschlossenem Zustand der Leistungsschalter auf indirektem Weg ermittelt werden, etwa anhand der Drehzahl.

In dem Diagramm gemäß Figur 4 bezeichnet das Bezugszeichen 92 den Verlauf des bei Aktivierung der Überspannungs-Schutzeinrichtung erzeugten Kurzschlussstroms in einer Phasenwicklung 12A, 12B, 12C des Stators, das Bezugszeichen 94 das damit zusammenhängende Drehmoment sowie das Bezugszeichen 96 die bei Aktivierung der Überspannungs-Schutzeinrichtung erzeugte Kurzschlussleistung in Abhängigkeit von der Drehzahl des Rotors. Man erkennt, dass der Kurzschlussstrom nur bei sehr kleinen Drehzahlen ein merkliches Drehmoment auf den Rotor ausübt und die erzeugte Kurzschlussleistung bereits bei Drehzahlen ab 100 Umdrehungen pro Minute praktisch keine Rolle mehr spielt. Das bedeutet, dass die Aktivierung der Überspannungs-Schutzeinrichtung auf die Bewegung des Rotors nur noch eine vernachlässigbare Bremswirkung erzeugt, wenn die Aktivierung bei hohen Drehzahlen erfolgt, insbesondere bei Drehzahlen von 1000 Umdrehungen pro Minute oder mehr.

## Patentansprüche

1. Leistungselektronikeinheit (10) zur Ansteuerung einer permanentmagnetisch erregten elektrischen Maschine mit einem Rotor und einem mehrere Statorwicklungen (12A, 12B, 12C) aufweisenden Stator, aufweisend
- wenigstens einen Leistungsschalter (30A, 32A, 30B, 32B, 30C, 32C), der zur Ansteuerung einer der Statorwicklungen (12A, 12B, 12C) ausgebildet ist, und
- eine Überspannungs-Schutzeinrichtung zum Schutz des Leistungsschalters (30A, 32A, 30B, 32B, 30C, 32C) vor Überspannung,
wobei die Überspannungs-Schutzeinrichtung eine dem Leistungsschalter (30A, 32A, 30B, 32B, 30C, 32C) zugeordnete Phasenspannungs-Erfassungseinrichtung (38A, 38B, 38C) sowie eine Kurzschluss-Schalteinrichtung aufweist, welche bei Erreichen oder Überschreiten eines vorgegebenen Phasenspannungs-Schwellenwerts der von der Phasenspannungs-Erfassungseinrichtung (38A, 38B, 38C) erfassten Phasenspannung zum Kurzschließen der dem Leistungsschalter (30A, 32A, 30B, 32B, 30C, 32C) zugeordneten Statorwicklung (12A, 12B, 12C) aktivierbar ist;
wobei die Kurzschluss-Schalteinrichtung den zur Ansteuerung der Statorwicklung (12A, 12B, 12C) ausgebildeten Leistungsschalter (30A, 32A, 30B, 32B, 30C, 32C) aufweist;
wobei die Kurzschluss-Schalteinrichtung eine Auswertelogik (60) zur Ansteuerung der Kurzschluss-Schalteinrichtung umfasst;
**dadurch gekennzeichnet dass** die Auswertelogik (60) derart ausgebildet ist, dass der vorgegebene Phasenspannungs-Schwellenwert einstellbar ist, und dass die Auswertelogik (60) die Phasenspannungen aller Phasen der elektrischen Maschine erfasst und dann, wenn eine dieser Phasenspannungen den vorgegebenen Phasenspannungs-Schwellenwert erreicht oder überschreitet, einen oder mehrere der jeweiligen Phase zugeordnete(n) Leistungsschalter (30A, 32A, 30B, 32B, 30C, 32C) in einen leitenden Zustand schaltet, so dass die jeweilige Statorwicklung (12A, 12B, 12C) kurzgeschlossen ist.

2. Leistungselektronikeinheit (10) nach Anspruch 1, wobei der Leistungsschalter (30A, 32A, 30B, 32B, 30C, 32C) ein der Statorwicklung (12A, 12B, 12C) zugeordnetes Kurzschluss-Schaltelement der Kurzschluss-Schalteinrichtung bildet und die Kurzschluss-Schalteinrichtung den Leistungsschalter (30A, 32A, 30B, 32B, 30C, 32C) in einen leitenden Zustand schaltet, um die dem Leistungsschalter zugeordnete Statorwicklung (12A, 12B, 12C) kurzzuschließen.

3. Leistungselektronikeinheit (10) nach Anspruch 1 oder 2, wobei der Leistungsschalter (30A, 32A, 30B, 32B, 30C, 32C) als Schalteinrichtung einer Wechselrichter-Brücke (28) zur Ansteuerung der Statorwicklung (12A, 12B, 12C) ausgebildet ist.

4. Leistungselektronikeinheit (10) nach einem der Ansprüche 1 bis 3, welche eine mehrphasige, insbesondere dreiphasige, Wechselrichterbrücke (28) zur Ansteuerung eines mit mehreren, insbesondere drei, Statorwicklungen (12A, 12B, 12C) versehenen Stators aufweist.

5. Leistungselektronikeinheit (10) nach einem der Ansprüche 1 bis 4, aufweisend einen Gleichspannungszwischenkreis (14) mit einem ersten Pol (20) und einem zweiten Pol (22), wobei der Eingang des wenigstens einen Leistungsschalters (30A, 32A, 30B, 32B, 30C, 32C) mit einem der Pole (20, 22) des Gleichspannungszwischenkreises (14) verbunden ist.

6. Leistungselektronikeinheit (10) nach einem der Ansprüche 1 bis 5, wobei die Kurzschluss-Schalteinrichtung derart ausgebildet ist, dass sie den Leistungsschalter (30A, 32A, 30B, 32B, 30C, 32C) nach erfolgter Aktivierung zur Erzeugung eines Kurzschlusses der zugeordneten Statorwicklung (12A, 12B, 12C) bis zur Deaktivierung der Kurzschluss-Schalteinrichtung in leitendem Zustand hält.

7. Leistungselektronikeinheit nach einem der Ansprüche 1 bis 6, wobei die Kurzschluss-Schalteinrichtung derart ausgebildet ist, dass sie den Leistungsschalter (30A, 32A, 30B, 32B, 30C, 32C) nur dann zur Erzeugung eines Kurzschlusses der zugeordneten Statorwicklung (12A, 12B, 12C) in einen leitenden Zustand schaltet, wenn die Drehzahl des Rotors eine vorgegebene Mindestdrehzahl erreicht oder überschreitet.

8. Leistungselektronikeinheit (10) nach Anspruch 7, wobei die vorgegebene Mindestdrehzahl 500 min⁻¹ beträgt, insbesondere 1000 min⁻¹ beträgt, insbesondere 1500 min⁻¹ beträgt.

9. Leistungselektronikeinheit (10) nach einem der Ansprüche 1 bis 8, wobei die Kurzschluss-Schalteinrichtung derart ausgebildet ist, dass sie den Leistungsschalter (30A, 32A, 30B, 32B, 30C, 32C) nur dann zur Erzeugung eines Kurzschlusses der zugeordneten Statorwicklung (12A, 12B, 12C) in einen leitenden Zustand schaltet, wenn die elektrische Maschine in einem Feldschwächungsmodus arbeitet.

10. Leistungselektronikeinheit (10) nach einem der Ansprüche 1 bis 9, wobei der Auswertelogik (60) eine Hysterese-Logik (70) zugeordnet ist, die derart ausgebildet ist, dass Aktivierung und Deaktivierung der Kurzschluss-Schalteinrichtung bei verschiedenen Phasenspannungen (UA, U_{D}) erfolgen.

11. Leistungselektronikeinheit (10) nach einem der Ansprüche 1 bis 10, wobei der Kurzschluss-Schalteinrichtung eine eigene Energieversorgung (90) zugeordnet ist, die unabhängig von der Energieversorgung der Leistungselektronikeinheit (10) ist.

12. Leistungselektronikeinheit (10) nach einem der Ansprüche 1 bis 12, wobei die Kurzschluss-Schalteinrichtung derart ausgebildet ist, dass sie mit den Kurzschluss-Schalteinrichtungen von anderen in Betrieb befindlichen Phasen in Datenaustausch steht.

13. Verfahren zur Ansteuerung einer permanentmagneterregten elektrischen Maschine mit einem Rotor und einem mehrere Statorwicklungen (12A, 12B, 12C) aufweisenden Stator, aufweisend:
- Ansteuern einer der Statorwicklungen (12A, 12B, 12C) mit Hilfe eines Leistungsschalters (30A, 32A, 30B, 32B, 30C, 32C),
- Erfassen einer an dem Leistungsschalter (30A, 32A, 30B, 32B, 30C, 32C) anliegenden Phasenspannung, und
- Kurzschließen der dem Leistungsschalter (30A, 32A, 30B, 32B, 30C, 32C) zugeordneten Statorwicklung (12A, 12B, 12C), wenn die erfasste Phasenspannung einen vorgegebenen Phasenspannungs-Schwellenwert (UA) erreicht oder überschreitet, um die an dem Leistungsschalter (30A, 32A, 30B, 32B, 30C, 32C) anliegende Phasenspannung zu begrenzen;
wobei das Kurzschließen mittels Schalten des Leistungshalbleiters (30A, 32A, 30B, 32B, 30C, 32C) in einen leitenden Zustand erfolgt.
**dadurch gekennzeichnet, dass** die Phasenspannungen aller Phasen der elektrischen Maschine erfasst werden und, dann wenn eine dieser Phasenspannungen den vorgegebenen Phasenspannungs-Schwellenwert erreicht oder überschreitet, einer oder mehrere der jeweiligen Phase zugeordnete(n) Leistungsschalter (30A, 32A, 30B, 32B, 30C, 32C) in einen leitenden Zustand geschaltet werden, so dass die jeweilige Statorwicklung (12A, 12B, 12C) kurzgeschlossen ist.

14. Verfahren nach Anspruch 13, wobei das Schalten des Leistungsschalters in nicht getakteter Weise erfolgt.

15. Verfahren nach Anspruch 13 oder 14, wobei das Schalten des Leistungsschalters (30A, 32A, 30B, 32B, 30C, 32C) nur dann erfolgt, wenn die Drehzahl des Rotors eine vorgegebene Mindestdrehzahl erreicht oder überschreitet; wobei die vorgegebene Mindestdrehzahl insbesondere 500 min⁻¹ beträgt, insbesondere 1000 min⁻¹ beträgt, insbesondere 1500 min⁻¹ beträgt.

## Claims

1. A power electronics unit (10) for driving a permanent-magnet excited electric machine including a rotor and a stator having a plurality of stator windings (12A, 12B, 12C), comprising
- at least one power switch (30A, 32A, 30B, 32B, 30C, 32C) designed to drive one of the stator windings (12A, 12B, 12C), and
- an overvoltage protection device to protect the power switch (30A, 32A, 30B, 32B, 30C, 32C) from overvoltage,
wherein the overvoltage protection device comprises a phase voltage detecting device (38A, 38B, 38C) associated with the power switch (30A, 32A, 30B, 32B, 30C, 32C) as well as a short-circuit switching device which, when a predetermined phase voltage threshold value of the phase voltage detected by the phase voltage detecting device (38A, 38B, 38C) is reached or exceeded, is adapted to be activated for short-circuiting the stator winding (12A, 12B, 12C) associated with the power switch (30A, 32A, 30B, 32B, 30C, 32C);
wherein the short-circuit switching device comprises the power switch (30A, 32A, 30B, 32B, 30C, 32C) designed to drive the stator winding (12A, 12B, 12C);
wherein the short-circuit switching device comprises an evaluation logic (60) for driving the short-circuit switching device,
**characterized in that** the evaluation logic (60) is designed such that the predetermined phase voltage threshold value is adjustable, and
that the evaluation logic (60) detects the phase voltages of all phases of the electric machine and, in case one of these phase voltages reaches or exceeds the predetermined phase voltage threshold value, switches one or more of the power switches (30A, 32A, 30B, 32B, 30C, 32C) associated with the respective phase to a conducting state, so that the respective stator winding (12A, 12B, 12C) is short-circuited.

2. The power electronics unit (10) of claim 1,
wherein the power switch (30A, 32A, 30B, 32B, 30C, 32C) forms a short-circuit switching element of the short-circuit switching device that is associated with the stator winding (12A, 12B, 12C), and the short-circuit switching device switches the power switch (30A, 32A, 30B, 32B, 30C, 32C) to a conducting state in order to short-circuit the stator winding (12A, 12B, 12C) associated with the power switch.

3. The power electronics unit (10) of claim 1 or 2,
wherein the power switch (30A, 32A, 30B, 32B, 30C, 32C) is formed as switching element of an inverter bridge (28) for driving the stator winding (12A, 12B, 12C).

4. The power electronics unit (10) of any of claims 1 to 3,
comprising a multi-phase, in particular three-phase, inverter bridge (28) for driving a stator provided with a plurality, in particular three, stator windings (12A, 12B, 12C).

5. The power electronics unit (10) of any of claims 1 to 4,
comprising a DC voltage intermediate circuit (14) having a first pole (20) and a second pole (22), the input of the at least one power switch (30A, 32A, 30B, 32B, 30C, 32C) being connected to one of the poles (20, 22) of the DC voltage intermediate circuit (14).

6. The power electronics unit (10) of any of claims 1 to 5,
wherein the short-circuit switching device is designed such that it keeps the power switch (30A, 32A, 30B, 32B, 30C, 32C) in the conducting state after activation to generate a short-circuit of the associated stator winding (12A , 12B, 12C), until deactivation of the short-circuiting switching device.

7. The power electronics unit of any of claims 1 to 6,
wherein the short-circuit switching device is designed such that it switches the power switch (30A, 32A, 30B, 32B, 30C, 32C) to a conducting state to generate a short-circuit of the associated stator winding (12A, 12B, 12C), only when the speed of the rotor reaches or exceeds a predetermined minimum speed.

8. The power electronics unit (10) of claim 7,
wherein the predetermined minimum speed is 500 min⁻¹, in particular 1000 min⁻¹, especially 1500 min⁻¹.

9. The power electronics unit (10) of any one of claims 1 to 8,
wherein the short-circuit switching device is designed such that it switches the power switch (30A, 32A, 30B, 32B, 30C, 32C) to a conducting state to generate a short-circuit of the associated stator winding (12A, 12B, 12C), only when the electric machine is operating in a field weakening mode.

10. The power electronics unit (10) of any of claims 1 to 9,
wherein the evaluation logic (60) has a hysteresis logic (70) associated therewith which is designed such that activation and deactivation of the short-circuit switching device take place at different phase voltages (U_{A}, U_{D}).

11. The power electronics unit (10) of any of claims 1 to 10,
wherein the short-circuit switching device has a power supply (90) of its own associated therewith, which is independent of the power supply of the power electronics unit (10).

12. The power electronics unit (10) of any of claims 1 to 12,
wherein the short-circuit switching device is designed such that it is in data exchange communication with the short-circuit switching devices of other phases in operation.

13. A method of driving a permanent-magnet excited electric machine including a rotor and a stator having a plurality of stator windings (12A, 12B, 12C), said method comprising the steps of:
- driving one of the stator windings (12A, 12B, 12C) by means of a power switch (30A, 32A, 30B, 32B , 30C, 32C),
- detecting a phase voltage applied to the power switch (30A, 32A, 30B, 32B, 30C, 32C), and
- short-circuiting the stator winding (12A, 12B, 12C) associated with the power switch (30A, 32A, 30B, 32B, 30C, 32C) when the detected phase voltage reaches or exceeds a predetermined phase voltage threshold value (UA) in order to limit the phase voltage applied to the power switch (30A, 32A, 30B, 32B, 30C, 32C);
wherein short-circuiting is performed by switching the power semiconductor (30A, 32A, 30B, 32B, 30C, 32C) to a conducting state, **characterized in that** the phase voltages of all phases of the electric machine are detected and, in case one of these phase voltages reaches or exceeds the predetermined phase voltage threshold value, one or more of the power switches (30A, 32A, 30B, 32B, 30C, 32C) associated with the respective phase are switched to a conducting state, so that the respective stator winding (12A, 12B, 12C) is short-circuited.

14. The method of claim 13,
wherein switching of the power switch takes place in a non-clocked manner.

15. The method of claim 13 or 14,
wherein switching of the power switch (30A, 32A, 30B, 32B, 30C, 32C) takes place only when the speed of the rotor reaches or exceeds a predetermined minimum speed; wherein the predetermined minimum speed is specifically 500 min⁻¹, in particular 1000 min⁻¹, especially 1500 min⁻¹.

## Revendications

1. Unité électronique de puissance (10) destinée à la commande d'une machine électrique excitée par l'intermédiaire d'un aimant permanent, qui comprend un rotor et un stator qui présente plusieurs enroulements de stator (12A, 12B, 12C), qui présente :
- au moins un commutateur de puissance (30A, 32A, 30B, 32B, 30C, 32C), qui est réalisé à des fins de commande d'un des enroulements de stator (12A, 12B, 12C) ; et
- un mécanisme de protection contre les surtensions, qui est destiné à protéger le commutateur de puissance (30A, 32A, 30B, 32B, 30C, 32C) contre une surtension ;
dans laquelle le mécanisme de protection contre les surtensions présente un mécanisme d'enregistrement de la tension de phase (38A, 38B, 38C) qui est attribué au commutateur de puissance (30A, 32A, 30B, 32B, 30C, 32C), de même qu'un mécanisme de commutation de court-circuit qui, lorsqu'on atteint ou lorsqu'on dépasse vers le haut une valeur seuil prédéfinie de tension de phase de la tension de phase enregistrée par l'intermédiaire du mécanisme d'enregistrement de la tension de phase (38A, 38B, 38C), peut être activé pour la mise en court-circuit de l'enroulement de stator (12A, 12B, 12C) qui est attribué au commutateur de puissance (30A, 32A, 30B, 32B, 30C, 32C) ;
dans laquelle le mécanisme de commutation de court-circuit présente le commutateur de puissance (30A, 32A, 30B, 32B, 30C, 32C) qui est réalisé à des fins de commande de l'enroulement de stator (12A, 12B, 12C) ;
dans laquelle le mécanisme de commutation de court-circuit comprend une logique d'évaluation (60) qui est destinée à la commande du mécanisme de commutation de court-circuit ;
**caractérisé en ce que** la logique d'évaluation (60) est réalisée d'une manière telle que l'on peut régler la valeur seuil prédéfinie de la tension de phase ; et
**en ce que** la logique d'évaluation (60) enregistre les tensions de phases de toutes les phases de la machine électrique, partant, lorsqu'une de ces tensions de phases atteint ou dépasse vers le haut la valeur seuil de la tension de phase qui a été prédéfinie, fait passer par commutation dans un état de conduction un ou plusieurs commutateurs de puissance (30A, 32A, 30B, 32B, 30C, 32C) qui est/sont attribué(s) à la phase respective, tant et si bien que l'enroulement de stator respectif (12A, 12B, 12C) est mis en court-circuit.

2. Unité électronique de puissance (10) selon la revendication 1, dans laquelle le commutateur de puissance (30A, 32A, 30B, 32B, 30C, 32C) forme un élément de commutation de court-circuit du mécanisme de commutation de court-circuit, qui est attribué à l'enroulement de stator (12A, 12B, 12C), et le mécanisme de commutation de court-circuit fait passer par commutation dans un état de conduction le commutateur de puissance (30A, 32A, 30B, 32B, 30C, 32C) afin de mettre en court-circuit l'enroulement de stator (12A, 12B, 12C) qui est attribué au commutateur de puissance.

3. Unité électronique de puissance (10) selon la revendication 1 ou 2, dans laquelle le commutateur de puissance (30A, 32A, 30B, 32B, 30C, 32C) est réalisé sous la forme d'un mécanisme de commutation d'une structure en pont d'onduleur (28) pour la commande de l'enroulement de stator (12A, 12B, 12C).

4. Unité électronique de puissance (10) selon l'une quelconque des revendications 1 à 3, qui présente une structure en pont d'onduleur (28) de type polyphasé, en particulier de type triphasé, qui est destinée à la commande d'un stator muni de plusieurs enroulements de stator, en particulier de trois enroulements de stator (12A, 12B, 12C).

5. Unité électronique de puissance (10) selon l'une quelconque des revendications 1 à 4, qui présente un circuit intermédiaire (14) du type qui présente une tension continue comprenant un premier pôle (20) et un deuxième pôle (22) ; dans laquelle l'entrée dudit au moins un commutateur de puissance (30A, 32A, 30B, 32B, 30C, 32C) est reliée à un des pôles (20, 22) du circuit intermédiaire (14) du type qui présente une tension continue.

6. Unité électronique de puissance (10) selon l'une quelconque des revendications 1 à 5, dans laquelle le mécanisme de commutation de court-circuit est réalisé d'une manière telle qu'il maintient le commutateur de puissance (30A, 32A, 30B, 32B, 30C,
32C) dans l'état de conduction, une fois son activation mise en œuvre pour l'obtention d'un court-circuit de l'enroulement de stator assigné (12A, 12B, 12C) jusqu'à la désactivation du mécanisme de commutation de court-circuit.

7. Unité électronique de puissance selon l'une quelconque des revendications 1 à 6, dans laquelle le mécanisme de commutation de court-circuit est réalisé d'une manière telle qu'il ne fait passer le commutateur de puissance (30A, 32A, 30B, 32B, 30C, 32C) dans un état de conduction pour l'obtention d'un court-circuit de l'enroulement de stator assigné (12A, 12B, 12C) que lorsque la vitesse de rotation du rotor atteint ou dépasse vers le haut une vitesse de rotation minimale qui a été prédéfinie.

8. Unité électronique de puissance (10) selon la revendication 7, dans laquelle la vitesse de rotation minimale qui a été prédéfinie s'élève à 500 min⁻¹, de manière particulière s'élève à 1.000 min⁻¹, en particulier s'élève à 1.500 min⁻¹.

9. Unité électronique de puissance (10) selon l'une quelconque des revendications 1 à 8, dans laquelle le mécanisme de commutation de court-circuit est réalisé d'une manière telle qu'il ne fait passer le commutateur de puissance (30A, 32A, 30B, 32B, 30C, 32C) dans un état de conduction pour l'obtention d'un court-circuit de l'enroulement de stator assigné (12A, 12B, 12C) que lorsque la machine électrique travaille dans un mode de champ réduit.

10. Unité électronique de puissance (10) selon l'une quelconque des revendications 1 à 9, dans laquelle, à la logique d'évaluation (60), est attribuée une logique d'hystérésis (70) qui est réalisée d'une manière telle que l'activation et la désactivation du mécanisme de commutation de court-circuit ont lieu à des tensions de phases différentes (UA, U_{D}).

11. Unité électronique de puissance (10) selon l'une quelconque des revendications 1 à 10, dans laquelle, au mécanisme de commutation de court-circuit, est attribuée une alimentation propre en énergie (90) qui est indépendante de l'alimentation en énergie de l'unité électronique de puissance (10).

12. Unité électronique de puissance (10) selon l'une quelconque des revendications 1 à 11, dans laquelle le mécanisme de commutation de court-circuit est réalisé d'une manière telle qu'il se trouve dans un état d'échange de données avec les mécanismes de commutation de court-circuit d'autres phases en cours d'exploitation.

13. Procédé pour la commande d'une machine électrique excitée par l'intermédiaire d'un aimant permanent, qui comprend un rotor et un stator qui présente plusieurs enroulements de stator (12A, 12B, 12C), qui présente :
- le fait de commander un des enroulements de stator (12A, 12B, 12C) à l'aide d'un commutateur de puissance (30A, 32A, 30B, 32B, 30C, 32C) ;
- le fait d'enregistrer une tension de phase en vigueur au commutateur de puissance (30A, 32A, 30B, 32B, 30C, 32C) ; et
- le fait de mettre en court-circuit l'enroulement de stator (12A, 12B, 12C) qui est attribué au commutateur de puissance (30A, 32A, 30B, 32B, 30C, 32C) lorsque la tension de phase enregistrée atteint ou dépasse vers le haut une valeur seuil de tension de phase (UA) qui a été prédéfinie dans le but d'atténuer la tension de phase en vigueur au commutateur de puissance (30A, 32A, 30B, 32B, 30C, 32C) ;
dans lequel la mise en court-circuit a lieu au moyen d'un passage du semi-conducteur de puissance (30A, 32A, 30B, 32B, 30C, 32C) par commutation dans un état de conduction ;
**caractérisé en ce que** l'on enregistre les tensions de phases de toutes les phases de la machine électrique ; ensuite, lorsque qu'une de ces tensions de phase atteint ou dépasse vers le haut la valeur seuil de tension de phase qui a été prédéfinie, on procède au passage par commutation d'un ou de plusieurs commutateurs de puissance (30A, 32A, 30B, 32B, 30C, 32C) qui est/sont attribué(s) à la phase respective dans un état de conduction d'une manière telle que l'enroulement de stator respectif (12A, 12B, 12C) est mis en court-circuit.

14. Procédé selon la revendication 13, dans lequel la commutation du commutateur de puissance a lieu d'une manière non synchronisée.

15. Procédé selon la revendication 13 ou 14, dans lequel la commutation du commutateur de puissance (30A, 32A, 30B, 32B, 30C, 32C) n'a lieu que lorsque la vitesse de rotation du rotor atteint ou dépasse vers le haut une vitesse de rotation minimale qui a été prédéfinie ; dans lequel la vitesse de rotation minimale qui a été prédéfinie s'élève à 500 min⁻¹, de manière particulière s'élève à 1.000 min⁻¹, en particulier s'élève à 1.500 min⁻¹.
